# EUROPEAN PATENT SPECIFICATION

(11) **EP 3 731 982 B1**
(45) Date of publication and mention of the grant of the patent: **21.02.2024**
(21) Application number: 18803543.0
(22) Date of filing: 02.11.2018
(51) Int. Cl.: B21D 28/16, B21D 28/22, H02K 15/02, B21D 35/00

(54) **MULTI-LAYER BLANKING PROCESS FOR MANUFACTURING METAL PARTS**
MEHRSCHICHTSTANZVERFAHREN ZUR HERSTELLUNG VON METALLTEILEN
PROCÉDÉ DE DÉCOUPAGE MULTICOUCHE DESTINÉ À LA FABRICATION DE PIÈCES MÉTALLIQUES

(30) Priority: 02.11.2017 NL 1042618
(43) Date of publication of application: 04.11.2020
(73) Proprietor: Robert Bosch GmbH, 70442 Stuttgart (DE)
(72) Inventor: BRANDSMA, Arjen, 5045 WN Tilburg (NL); PENNINGS, Bert, 5052 CH Tilburg (NL); SNIPPE, Corijn, 5000 AM Tilburg (NL); BURGHAUS, Jens, 70376 Stuttgart (DE); KOOPMANS, Sipke, 5045 LP Tilburg (NL)
(74) Representative: Plevier, Gabriël Anton Johan Maria
(86) International application number: PCT/EP2018/025275
(87) International publication number: WO 2019/086146

(56) References cited:
- WO-A1-2011/077557
- JP-A- 2016 129 902
- JP-A- 2016 151 050
- US-A- 5 798 001

## Description

The present disclosure relates to a process for the blanking of metal parts, in particular a multi-layer blanking process. The blanking process is, as such, generally known and are broadly applied in the manufacturing of metal parts, in particular for the cutting-out thereof from strip, sheet or plate shaped basic material. In the known blanking process at least the 2D contour of the metal part is shaped by pressing a correspondingly shaped blanking punch against and through the basic material, which basic material is clamped between a blanking die and a blank holder of a blanking device. The blanking die and the blank holder thereto define a respective cavity that is shaped to accommodate the blanking punch. An edge of the blanking die defining the contour of the cavity thereof, carves into and finally completely cuts through the basic material, as such basic material is progressively pressed into the cavity by the movement of the blanking punch relative to the blanking die.

In the known blanking process and device, many factors such as a chamfering of the cutting edge of the blanking die, a clearance between an outer contour of the blanking punch and an inner contour of the blanking die defining the cavity, the pressing force exerted by the blanking punch, the thickness and mechanical properties of the basic material, etc., each have their respective influence on the blanking process result, e.g. in terms of the shape accuracy and/or surface quality of the blanked parts.

The above-described blanking process and blanking device are for example used in the manufacture of individual lamina for a laminate, such as rotor and/or stator lamina stacks for electric motors, as described in the US patent number 4,738,020, or transformer core laminates. In relation to this and other known applications of blanked parts, it may be a technical desire to produce the individual blanked parts with a small thickness by using basic material of such small thickness. For example in case of the said electric motor stator or rotor stack, the electrical efficiency of the electric motor is, at least to a certain extent, inversely proportional to the thickness of the basic material, i.e. of the individual rotor/stator lamina. However, in practice, a minimum required thickness applies to the basic material in the blanking process. Otherwise, the basic material may be too thin for the proper handling thereof, e.g. may deform when being supplied to the blanking device. Also, a (too) thin basic material may result in the unwanted deformation of the blanked part, such as a stretching or a local thinning thereof, by the force exerted by the blanking punch. Finally, manufacturing economics plays a limiting role as well. After all, the thinner the individual lamina is, the more lamina have to be manufactured to build a laminate stack of certain height.

In order to increase a production rate of the known blanking process, it has been proposed in JP-A-2016129902 to apply a layered basic material therein, i.e. to stack two or more layers of the basic material on top of one another prior to the actual blanking, i.e. cutting thereof. Then, a number of blanked parts can be formed with a single blanking punch in a single blanking stroke that corresponds to the number of layers of the layered basic material. However, it has been observed in the art that a plastic deformation at the cut edges of the thus blanked parts can exceed such deformation obtained in the more conventional blanking process utilizing one layer of basic material only. This latter feature of the so-called multi-layer blanking process limits the practical use thereof, as not all applications of the blanked parts can accommodate such large plastic deformation, or at least such feature may compromise the performance of the blanked parts in certain applications thereof. For example, the electrical and/or magnetic properties of the said laminate stack may not be optimal due to such large plastic deformation at the cut edges of the individual lamina. In particular plastic deformation disadvantageously decreases the magnetic permeability and/or increases the magnetic hysteresis (losses) of the metal. Also as a result thereof, a smaller or larger (air) gap may disadvantageously be present between at least some of the lamina in the laminate stack at or near the cut edges thereof. Furthermore, reduction plastic deformation during blanking helps to reduce the formation of blanking burrs and improves the shape accuracy of the blanked parts, for example allowing these to be press fitted. Document US-A-5798001 discloses an annealing and/or normalizing heat treatment after the laminations are blanked.

The present invention aims to improve upon the multi-layer blanking process. In particular, the present invention aims to reduce the plastic deformation at or near the cut edges of the blanked parts that are obtained with such process.

According to the present invention, such aim is realised with the process for blanking metal parts in accordance with the claim 1 hereinafter. According to the present invention, the basic material is obtained by the cold rolling of stock material to reduce the thickness thereof and thus to work-harden the basic material by crystal grain size refinement and dislocation nucleation. Hereby, an elongation to fracture of the basic material is decreased considerably, i.e. its brittleness is increased. Then a number of layers of the basic material are combined into the layered basic material and metal parts are blanked from the layered basic material. Subsequently, the blanked parts are subjected to a so-called normalizing or annealing heat treatment to improve the mechanical, electrical and/or magnetic properties thereof, in particular to decrease brittleness by the so-called recovery and re-crystallization of their metal microstructure. In particular in case of a steel basic material, such as electrical steel, the annealing or normalizing heat treatment of steel is typically carried out at a temperature above 650 degrees Celsius, e.g. at about 800 to 1000°C. Preferably, the metal parts are heated to such temperature inductively.

By the above novel multi-layer blanking process, an edge deformation of the blanked part introduced during the actual blanking, i.e. cutting, thereof is remarkably and favourably reduced, at least relative to when using basic material that is annealed after rolling, but before blanking. Preferably, a thickness of the basic material is defined in the process step of cold rolling at between 5% and 30% of the thickness of the stock material prior to such cold rolling. Furthermore, in particular in case of a steel basic material, such as electrical steel, a yield strength of more than 450 MPa, preferably of around 500 MPa, and/or a minimal hardness of more than 210 HV0.1 up to 450 HV0.1, preferably more than 250 HV0.1, more preferably in the range from 300 to 400 HV0.1, are sought after for the basic material in the said cold rolling process, i.e. before the blanking thereof (in particular as compared to a material hardness of up to 200 HV0.1 and a yield strength up to 420 MPa of annealed electrical steel).

In a more detailed embodiment of the novel multi-layer blanking process according to the present disclosure, an additional process step of oxidation of a surface layer of the cold rolled, but still non-layered basic material is included therein. According to the present disclosure, by such oxidised surface layer a relatively high friction is realised between the individual layers of the layered basic material, at least compared to the friction between the (cold) rolled surfaces thereof. By increasing the friction between the layers of the layered basic material, a relative movement there between is favourably inhibited. In particular, an observed phenomenon in the multi-layer blanking process of the intermediate layers of the layered basic material being stretched relative to the top and bottom layers thereof, while being pulled and bend into the cavity of the blanking die, can be counteracted by the said increased friction between the respective layers and the shape-consistency between all of simultaneously blanked parts can be improved. Of course steel oxidises form already at room temperature in air, but such oxidation can of course be accelerated by increasing the process temperature and/or in an oxygen-rich process atmosphere, while keeping well below the minimum annealing temperature of 650 degrees Celsius, e.g. at 600 degrees Centigrade, in order to maintain the presently desired mechanical properties of the cold-rolled basic material. In particular in case of strip shaped basic material, this is preferably heated to the oxidation process temperature inductively, e.g. by being gradually fed through an induction coil. The oxidation process temperature is preferably maintained only for 60 seconds or less, such that the oxidation process can be easily integrated in the overall process chain of the multi-layer blanking process, in particular just before the stacking of the layers of the basic material that can then be arranged as a continuous process relatively easily.

When the, in this case, surface oxidised, blanked parts are subjected to the normalizing or annealing heat treatment afterwards in accordance with the present disclosure, this latter heat treatment is carried out under a nitrogen atmosphere that is at least virtually free from hydrogen to avoid the reduction, i.e. removal, of the metal-oxide surface layer thereof.

It is noted that this latter, additional process step of oxidation is particularly effective when producing lamina for rotor, stator or transformer laminates from electrical steel, in particular those containing a/o between 1.5 and 3.5% by weight silicon and less than 0.005% by weight carbon. These types of laminates require the individual lamina thereof to be electrically isolated from one another, which electrical isolation is advantageously realized by the oxidised surface layer thereof as well.

It is further noted that the multi-layer blanking process in accordance with the present disclosure is particularly suited for and can favourably make use of layered basic material that is composed of 3 up to 12 or more layers, more preferably 4 to 6 layers. Furthermore, the process for blanking metal parts in accordance with the present disclosure can favourably make use of layered basic material that is composed of individual layers, each having a thickness in the range from 0.5 mm down to 0.05 mm or less, more favourably between 0.3 and 0.1 mm. In particular, the layered basic material used is preferably composed of 4 to 6 layers of between 0.1 and 0.2 mm thickness. The overall thickness of the layered basic material should preferably not exceed 2 mm to avoid excessive deformation of the layers thereof. For the same reason, a thickness of the layers should preferably not be less than 0.1 mm.

In the following, the multi-layer blanking process according to the present disclosure is explained further by way of example embodiments and with reference to the drawings, whereof:
Figure 1 is a perspective view of a typical blanked part, being a single lamina made from electrical steel for a stack of lamina, i.e. laminate, for a rotor of an electric motor;
Figures 2A to 2F schematically illustrate a multi-layer blanking device and process for forming blanked parts;
Figure 3 provides a schematically drawn detail of the figures 2D and 2E, as well as a photograph of the cut edges of the blanked parts obtained with the multi-layer blanking device and process;
Figure 4 is a diagrammatic representation of a first embodiment of a novel process chain of the multi-layer blanking process in accordance with the present disclosure; and
Figure 5 is a diagrammatic representation of a second embodiment of a novel process chain of the multi-layer blanking process in accordance with the present disclosure.

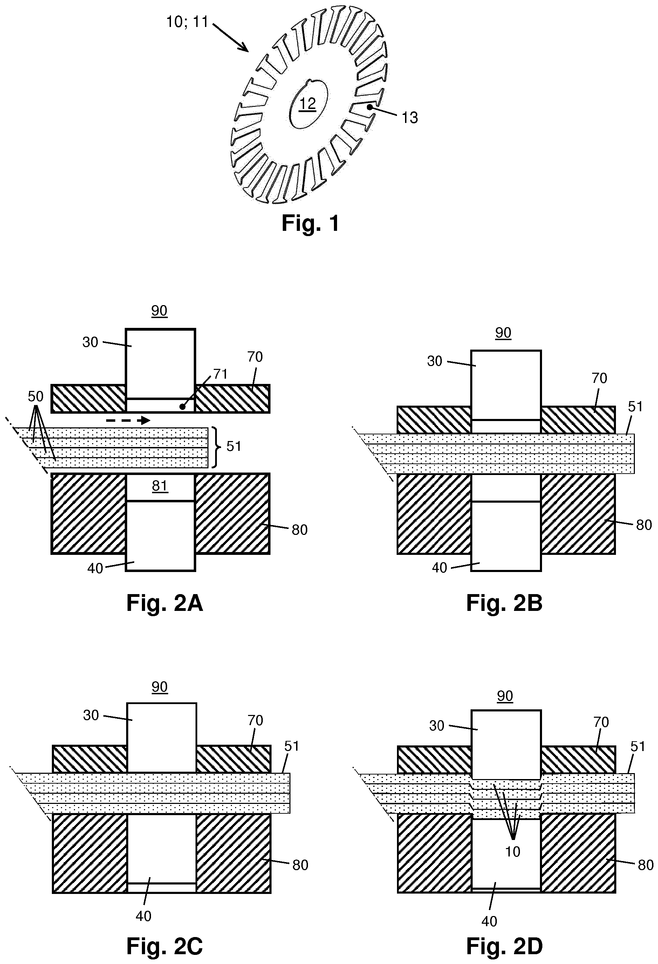

Figure 1 provides an example of a metal part 10 that can suitably be produced with the aid of a blanking process, in particular the multi-layer blanking process discussed herein. In this example the metal part 10 takes the form of a blanked disc 11 provided with a central hole 12 and a series of recesses 13 arranged along its circumference. Both the outer and the inner contour of the blanked disc 11 are formed, i.e. are cut out of a basic material, in particular electrical steel, either simultaneously in one cut or in a number of subsequent partial cuts in separate blanking stages. This particular type of blanked disc 11 is used in a laminate consisting of many such blanked discs 11 for a rotor of an electric motor. In such rotor, the central hole 12 of the blanked discs 11 accommodate a shaft of the rotor and the said recesses 13 thereof accommodate conductive material, such as copper wire windings. An electrically isolating layer is typically provided between the individual blanked discs 11 in the rotor laminate to reduce so-called Eddy current losses, typically by coating at least one and preferably both sides thereof in an electrically non-conductive layer, such as a bonding varnish or so-called Backlack.

The figures 2A-2F illustrate a multi-layer blanking process for producing the blanked discs 11 or the metal part 10 in general. The figures 2A-2F each represent a simplified cross-section of a blanking device 90 that is used to cut-out such metal parts 10 from a layered basic material 51 comprising two or more (here: four) of mutually stacked strips of basic material 50. The blanking device 90 includes a blanking punch 30, a counter punch 40, a blank holder 70 and a blanking die 80. The blank holder 70 and the blanking die 80 each define a respective cavity 71, resp. 81, wherein the blanking punch 30 and the counter punch 40 are contained, which cavities 71, 81 are shaped to correspond to (the contour of) the metal part 10. This particular type of blanking process/blanking device 90 using a counter punch 40 is known per se, namely as a fine-blanking.

In figure 2A, the blanking device 90 is shown in a first open state, wherein the blanking punch 30 is fully retracted into the blank holder 70, the counter punch 40 is fully retracted into the blanking die 80 and wherein the blank holder 70 and the blanking die 80 are separated from one another, at least sufficiently for allowing the layered basic material 51 to be inserted and/or advanced relative to the blanking device 90, as schematically indicated by the dashed arrow.

In figure 2B the blanking device 90 is shown after the blank holder 70 and the blanking die 80 have been moved towards each other to clamp the layered basic material 51 between them.

In figure 2C the blanking device 90 is shown after the blanking punch 30 and the counter punch 40 have been moved towards each other to also clamp the layered basic material 51 between them.

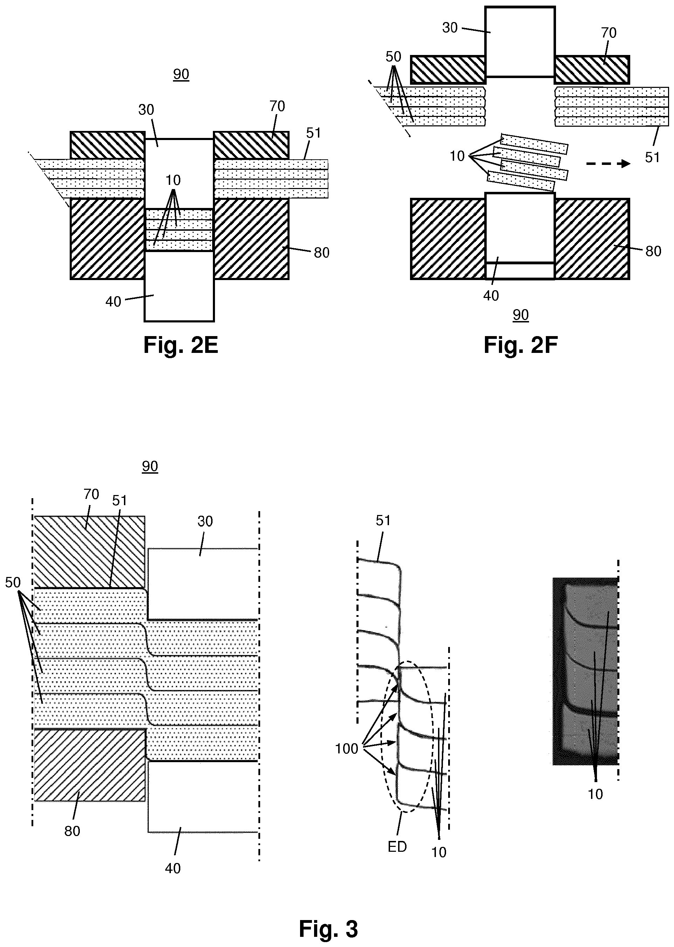

In figures 2D and 2E the step of cutting out the metal part 10 from each basic material strip 50 of the layered basic material 51, by the forced movement of the combination of the blanking punch 30 and the counter punch 40 relative to the blanking die 80, is illustrated. In particular in figure 2D the blanking device 90 is shown during such cutting-out and in figure 2E the blanking device 90 is shown after the metal parts 10 have been completely cut out, i.e. have been severed from the layered basic material 51, but are still held between the blanking punch 30 and the counter punch 40.

In figure 2F the blanking device 90 is shown in a second open state, wherein the blanking punch 30 is fully retracted into the blank holder 70 and wherein the counter punch 40 protrudes from the blanking die 80 after pushing the metal parts 10 upwards out of the cavity 81 of the blanking die 80 to allow the extraction thereof from the blanking device 90. After such extraction, the blanking device 90 returns to its first open state shown in figure 2A etc.

Figure 3 provides a close-up of the multi-layer blanking process and the blanking device 90 applied therein, as well as a cross-section of the cut edges of the metal parts 10 obtained therewith. In particular, in figure 3, a four layered basic material 51 is applied. Figure 3 illustrates the phenomenon that the intermediate layers of the layered basic material 51 are pulled and/or bend into the cavity of the blanking die 40, i.e. plastically deform by the movement of the blanking punch 30 during the actual blanking, i.e. cutting of the layered basic material 51. As a result the metal parts 10 show a noticeable plastic deformation at or near the cut edges 100 thereof, i.e. edge deformation ED.

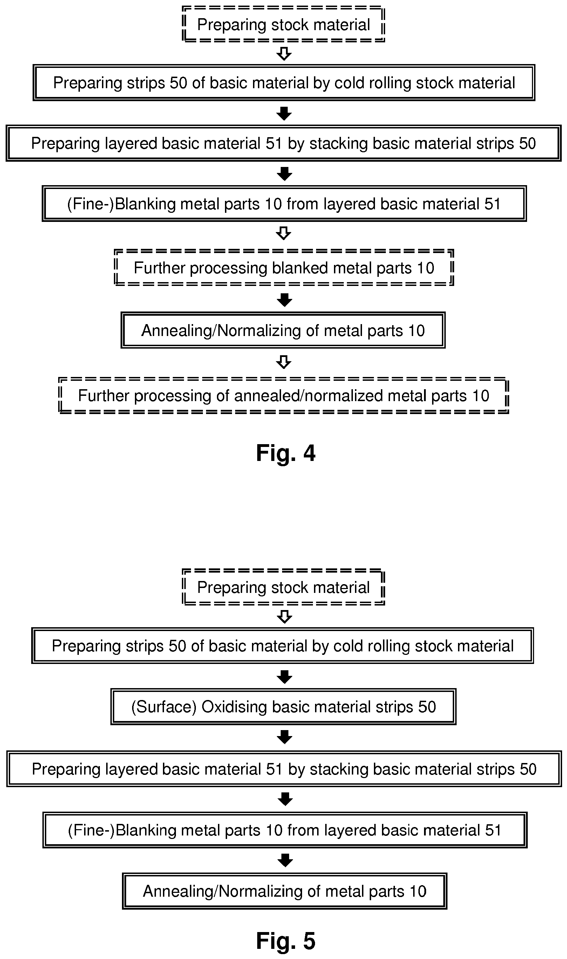

According to the present disclosure, the former multi-layer blanking process can be improved upon, in particular the edge deformation ED of the metal parts 10 can be reduced, favourably without modifying the chemical composition of the basic material or the above-described construction of the blanking device 90 as such. Rather, in accordance with the present disclosure, a novel process chain is provided, whereof a first embodiment is illustrated in figure 4. After a suitable stock material has been prepared by suitable and generally known process steps, such as alloying, casting, refining, rolling, cutting, annealing etc., the basic material is finally prepared to the desired thickness in a first step of the novel multi-layer blanking process by cold rolling. Then, in a second process step, a number of layers 50 of the basic material are combined, i.e. stacked, into the layered basic material 51. In a third process step the layered basic material 51 is supplied to the blanking device 90 and the metal parts 10 are blanked. Since the layered basic material 51 has a work-hardened microstructure, it is relatively brittle and, therefore, less prone to plastic deformation before shearing. Consequently, the said edge deformation in blanking at or near the cut edges of the metal parts 10 is reduced. Thereafter, in a fourth process step of the novel multi-layer blanking process, the metal parts 10 are subjected to the heat treatment of annealing or normalizing to at least reduce brittleness and, more in general, to improve the mechanical, electrical and/or magnetic properties electromagnetic properties thereof. It is noted that annealing with the controlled cooling of the metal parts 10 is typically preferred over normalising with air cooling for achieving optimum results in this latter respect.

Of course, further processing of the metal parts 10, such as deburring, coating, welding etc., can be included in the overall novel process chain, as desired. These further processing steps can be included either before or after the said process step of annealing or normalizing, as illustrated in figure 4. However, if these further processing steps negatively influence the microstructure of the metal parts vis-a-vis their intended use, it is preferably to carry out such further processing steps prior to the said process step of annealing or normalizing.

Also between the said first and second process steps of the above novel multi-layer blanking process further processes can be included such as a slitting process for cutting a plate of cold rolled basic material into strips 50 of suitable width. However, after cold rolling and before blanking, the basic material is in any case not heated to its recrystallization temperature to retain the work-hardened microstructure thereof.

Further according to the present disclosure, the edge deformation ED of the metal parts 10 resulting from the multi-layer blanking process can be further reduced by increasing the friction between the layers 50 of the layered basic material 51. Thereto, in a second embodiment of the novel multi-layer blanking process, which is illustrated in figure 5, an additional process step of oxidising the surface of the basic material 50 is included therein. In particular, such additional process step of oxidation is included in the novel process chain after the said first process step of cold rolling and before or as part of the said second process step of stacking. After being oxidised the surface of the basic material shows a considerably higher friction between the individual layers 50 of the layered basic material 51, as is desired to reduce the said edge deformation ED.

## Claims

1. A process for the blanking of metal parts (10) from a layered basic material (51) that is composed of a number of mutually stacked, individual layers (50), wherein each such individual layer (50) is obtained from a thicker starting material by means of at least a process step of cold rolling, wherein such individual layers (50) are stacked to form the layered basic material (51), wherein the metal parts (10) are blanked out of the layered basic material (51) by means of a blanking device (90) and wherein the metal parts (10) are subjected to an annealing and/or normalizing heat treatment after these are blanked, **characterized in that**, when the metal parts (10) are blanked therefrom, the individual layers (50) of the layered basic material (51) have a work-hardened microstructure obtained by the said cold-rolling thereof.

2. The process for the blanking of metal parts (10) from a layered basic material (51) according to claim 1, **characterised in that**, the individual, cold-rolled layers (50) of basic material are subjected to an oxidation process before or while these are stacked to form the layered basic material (51).

3. The process for the blanking of metal parts (10) from a layered basic material (51) according to claim 1 or 2, **characterised in that**, the said starting material is a steel, in particular a silicon steel such as is used for a stator or a rotor of an electromotor or in a transformer core, more in particular is a silicon steel with between 1.5% by weight and 3.5% by weight silicon and with less than 0.005% by weight carbon.

4. The process for the blanking of metal parts (10) from a layered basic material (51) according to a preceding claim, in particular according to claim 3, **characterised in that**, the annealing and/or normalizing heat treatment is carried out in a nitrogen atmosphere that is substantially free from hydrogen and at a temperature of at least 650 degrees Centigrade, preferably at a temperature in the range between 800 degrees Centigrade and 1000 degrees Centigrade.

5. The process for the blanking of metal parts (10) from a layered basic material (51) according to a preceding claim, **characterised in that**, a thickness of the individual layers (50) of layered basic material (51) is reduced to 5 to 30% of a thickness of the said starting material.

6. The process for the blanking of metal parts (10) from a layered basic material (51) according to a preceding claim, in particular according to claim 5, **characterised in that**, at the time of blanking the metal parts (10) from the layered basic material (51), the basic material has a hardness value of more than 210 HV0.1, preferably has a hardness in the range between 300 HV0.1 and 400 HV0.1.

7. The process for the blanking of metal parts (10) from a layered basic material (51) according to a preceding claim, in particular according to claim 5 or 6, **characterised in that**, at the time of blanking the metal parts (10) from the layered basic material (51), the basic material has a yield strength of more than 450 MPa, preferably has a yield strength of approximately 500 MPa.

8. The process for the blanking of metal parts (10) from a layered basic material (51) according to a preceding claim, **characterised in that**, the blanking device (90) is provided with a blank holder (70) and a blanking die (80) that each define a respective cavity (71; 81) with a contour of the metal parts (10, in which a blanking punch (30) and a counter punch (40) are contained movable, and **in that** the metal parts (10) are blanked by first clamping the layered basic material (51), on the one hand, between the blank holder (70) and the blanking die (80) and, on the other hand, between the blanking punch (30) and the counter punch (40) and by subsequently moving the blanking punch (30) and the counter punch (40) into the cavity (81) of the blanking die (81), whereby the layered basic material (51) is cut through by the blanking punch (30).

## Patentansprüche

1. Verfahren zum Stanzen von Metallteilen (10) aus einem geschichteten Grundmaterial (51), das aus einer Anzahl von aufeinander gestapelten Einzelschichten (50) besteht, wobei jede derartige Einzelschicht (50) aus einem dickeren Ausgangsmaterial durch mindestens einen Verfahrensschritt des Kaltwalzens erhalten wird, wobei solche Einzelschichten (50) zu dem geschichteten Grundmaterial (51) gestapelt werden, wobei die Metallteile (10) aus dem geschichteten Grundmaterial (51) mittels einer Stanzvorrichtung (90) ausgestanzt werden und wobei die Metallteile (10) nach dem Ausstanzen einer Glüh- und/oder Normalisierungswärmebehandlung unterzogen werden, **dadurch gekennzeichnet, dass** die Metallteile (10) Aus diesen werden die Einzelschichten (50) des Schichtgrundmaterials (51) ausgestanzt, die durch das Kaltwalzen ein ausgehärtetes Gefüge aufweisen.

2. Verfahren zum Stanzen von Metallteilen (10) aus einem geschichteten Grundmaterial (51) nach Anspruch 1, **dadurch gekennzeichnet, dass** die einzelnen, kaltgewalzten Schichten (50) Die Grundmaterialien werden vor oder während der Stapelung einem Oxidationsprozess unterzogen, um das geschichtete Grundmaterial (51) zu bilden.

3. Verfahren zum Stanzen von Metallteilen (10) aus einem geschichteten Grundmaterial (51) nach Anspruch 1 oder 2, **dadurch gekennzeichnet, dass** das Ausgangsmaterial ein Stahl ist, Insbesondere ist ein Siliziumstahl, wie er für einen Stator oder einen Rotor eines Elektromotors oder in einem Transformatorkern verwendet wird, insbesondere ein Siliziumstahl mit zwischen 1,5 Gew.-% bis 3,5 Gew.-% Silizium und mit weniger als 0,005 Gew.-% Kohlenstoff.

4. Verfahren zum Stanzen von Metallteilen (10) aus einem geschichteten Grundmaterial (51) nach einem vorhergehenden Anspruch, insbesondere nach Anspruch 3, **dadurch gekennzeichnet**, die Glüh- und/oder Normalisierungswärmebehandlung in einer im Wesentlichen wasserstofffreien Stickstoffatmosphäre bei einer Temperatur von mindestens 650 Grad Celsius durchgeführt wird, vorzugsweise bei einer Temperatur im Bereich zwischen 800 Grad Celsius und 1000 Grad Celsius.

5. Verfahren zum Stanzen von Metallteilen (10) aus einem geschichteten Grundmaterial (51) nach einem vorhergehenden Anspruch, **dadurch gekennzeichnet, dass** eine Dicke der Einzelschichten (50) aus geschichtetem Grundmaterial (51) wird auf 5 bis 30 % der Dicke des Ausgangsmaterials reduziert.

6. Verfahren zum Stanzen von Metallteilen (10) aus einem geschichteten Grundmaterial (51) nach einem vorhergehenden Anspruch, insbesondere nach Anspruch 5, **dadurch gekennzeichnet, dass** zum Zeitpunkt des Stanzens der Metallteile (10) aus dem geschichteten Grundmaterial (51)Der Grundwerkstoff weist einen Härtewert von mehr als 210 HV0.1 auf, weist vorzugsweise eine Härte im Bereich zwischen 300 HV0.1 und 400 HV0.1 auf.

7. Verfahren zum Stanzen von Metallteilen (10) aus einem geschichteten Grundwerkstoff (51) nach einem vorhergehenden Anspruch, insbesondere nach Anspruch 5 oder 6, **dadurch gekennzeichnet, dass** zum Zeitpunkt des Stanzens der Metallteile (10) aus dem geschichteten Grundwerkstoff (51) weist das Grundmaterial eine Streckgrenze von mehr als 450 MPa, vorzugsweise eine Streckgrenze von etwa 500 MPa auf.

8. Verfahren zum Stanzen von Metallteilen (10) aus einem geschichteten Grundmaterial (51) nach einem vorhergehenden Anspruch, **dadurch gekennzeichnet, dass** die Stanzeinrichtung (90) mit einem Rohlingshalter (70) und einem Stanzwerkzeug (80) versehen ist dass jeder einen entsprechenden Hohlraum (71; 81) mit einer Kontur der Metallteile (10, in der ein Stanzstempel (30) und ein Gegenstempel (40) beweglich enthalten sind, und dadurch, dass die Metallteile (10) durch erstes Spannen des geschichteten Grundmaterials (51) einerseits zwischen dem Rohlingshalter gestanzt werden (70) und dem Stanzwerkzeug (80) und andererseits zwischen dem Stanzstempel (30) und dem Gegenstempel (40) und durch anschließendes Verschieben des Stanzstempels (30) und des Gegenstempels (40) in den Hohlraum (81) des Stanzstempels (81)wobei das geschichtete Grundmaterial (51) durch den Stanzstempel (30) durchtrennt wird.

## Revendications

1. Procédé pour le découpage de pièces métalliques (10) à partir d'un matériau de base en couches (51) composé d'un certain nombre de couches individuelles empilées mutuellement (50), dans lequel chacune de ces couches individuelles (50) est obtenu à partir d'un matériau de départ plus épais au moyen d'au moins une étape de processus de laminage à froid, dans laquelle ces couches individuelles (50) sont empilées pour former le matériau de base en couches (51), dans lequel les parties métalliques (10) sont obturés du matériau de base en couches (51) au moyen d'un dispositif d'obturation (90) et dans lequel les pièces métalliques (10) sont soumises à un traitement thermique de recuit et/ou de normalisation après ceux-ci, **caractérisé en ce que**, lorsque les pièces métalliques (10) Les couches individuelles (50) du matériau de base stratifié (51) ont une microstructure durcie au travail obtenue par ledit laminage à froid.

2. Procédé de découpage de pièces métalliques (10) à partir d'un matériau de base stratifié (51) selon la revendication 1, **caractérisé en ce que** les différentes couches laminées à froid (50) Les matériaux de base sont soumis à un processus d'oxydation avant ou pendant que ceux-ci sont empilés pour former le matériau de base en couches (51).

3. Procédé de découpage de pièces métalliques (10) à partir d'un matériau de base stratifié (51) selon la revendication 1 ou 2, **caractérisé en ce que** ledit matériau de départ est un acier, en particulier un acier au silicium tel qu'il est utilisé pour un stator ou un rotor d'un électromoteur ou dans un noyau de transformateur, plus particulièrement un acier au silicium avec entre 1,5% en poids et 3,5% en poids de silicium et avec moins de 0,005% en poids de carbone.

4. Procédé de découpage de pièces métalliques (10) à partir d'un matériau de base stratifié (51) selon une revendication précédente, notamment selon la revendication 3, **caractérisé en ce que** le traitement thermique de recuit et/ou de normalisation est effectué dans une atmosphère d'azote substantiellement exempte d'hydrogène et à une température d'au moins 650 degrés centigrades, de préférence à une température comprise entre 800 degrés centigrades et 1000 degrés centigrades.

5. Procédé de découpage de pièces métalliques (10) à partir d'un matériau de base stratifié (51) selon une revendication précédente, **caractérisé en ce que**, une épaisseur des différentes couches (50) de matériau de base stratifié (51) est réduit à 5 à 30 % de l'épaisseur dudit matériau de départ.

6. Procédé de découpage de pièces métalliques (10) à partir d'un matériau de base stratifié (51) selon une revendication précédente, notamment selon la revendication 5, **caractérisé en ce que**, au moment du découpage des pièces métalliques (10) à partir du matériau de base stratifié (51), le matériau de base a une valeur de dureté supérieure à 210 HV0,1, de préférence une dureté comprise entre 300 HV0,1 et 400 HV0,1.

7. Procédé pour le découpage de pièces métalliques (10) à partir d'une matière de base en couches (51) selon une revendication précédente, notamment selon la revendication 5 ou 6, **caractérisé en ce que**, au moment du découpage des pièces métalliques (10) à partir de la matière de base en couches (51), le matériau de base a une limite d'élasticité de plus de 450 MPa, de préférence une limite d'élasticité d'environ 500 MPa.

8. Procédé de découpage de pièces métalliques (10) à partir d'un matériau de base stratifié (51) selon une revendication précédente, **caractérisé en ce que** le dispositif de découpage (90) est muni d'un support à blanc (70) et d'une matrice de découpage (80) que chacun définit une cavité respective (71; 81) avec un contour des parties métalliques (10, dans lequel un poinçon de découpage (30) et un contre poinçon (40) sont contenus mobiles, et **en ce que** les parties métalliques (10) sont ébauchées en serrant d'abord le matériau de base en couches (51), d'une part, entre le support à blanc (70) et la matrice de blanking (80) et, d'autre part, entre le poinçon de blanking (30) et le contre-poinçon (40) et en déplaçant par la suite le poinçon de blanking (30) et le contre-poinçon (40) dans la cavité (81) de la matrice de blanking (81), par lequel le matériau de base en couches (51) est coupé par le poinçon de découpage (30).
